# EUROPEAN PATENT SPECIFICATION

(11) **EP 1 757 782 B1**
(45) Date of publication and mention of the grant of the patent: **03.08.2011**
(21) Application number: 06123777.2
(22) Date of filing: 17.10.2001
(51) Int. Cl.: F01N 3/28, D04H 1/42, D04H 1/46

(54) **Catalytic converter comprising a holding and sealing material and corresponding manufacturing method**
Katalysator beinhaltend ein Halte- und Dichtungsmaterial sowie entsprechendes Herstellungsverfahren
Pot catalytique comprenant un matériau d'étancheité et de fixation et procédé de fabrication correspondant

(30) Priority: 17.10.2000 JP 2000316798
(43) Date of publication of application: 28.02.2007
(62) Divisional of application: 01976709.4
(73) Proprietor: IBIDEN CO., LTD., Ogaki-shi, Gifu 503-8604 (JP)
(72) Inventor: NISHIKAWA, Yoshio, Ogaki-shi, Gifu 503-8559 (JP); FUKUSHIMA, Koji, Ogaki-shi, Gifu 503-8559 (JP); YAMADA, Keiji, Ogaki-shi, Gifu 503-8559 (JP)
(74) Representative: HOFFMANN EITLE

(56) References cited:
- JP-A- 7 286 514
- JP-A- 11 082 006
- JP-A- 60 088 162
- US-A- 5 290 522
- US-A- 5 866 079
- PATENT ABSTRACTS OF JAPAN vol. 1996, no. 02, 29 February 1996 (1996-02-29) & JP 07 251018 A (MITSUBISHI CHEM CORP), 3 October 1995 (1995-10-03)
- PATENT ABSTRACTS OF JAPAN vol. 0121, no. 03 (C-485), 5 April 1988 (1988-04-05) & JP 62 231019 A (IBIDEN CO LTD), 9 October 1987 (1987-10-09)

## Description

### Technical Field

The present invention relates to a catalytic converter, and particularly relates to a holding and sealing material for catalytic converters and a method for manufacturing the same.

### Background Art

Internal combustion engines using gasoline and light oil as fuels have been used for a hundred years or longer as power sources for vehicles, particularly automobiles. However, harmful effects on the health and environment from exhaust became a matter of concern, and since then, various kinds of exhaust gas cleaning catalytic converters, which are apparatuses for removing CO, NOx and PM contained in exhaust gas have been proposed. A usual exhaust gas cleaning catalytic converter comprises a catalyst carrier, a metal shell covering the outer periphery of the catalyst carrier, and a holding and sealing material disposed in a gap between the former and the latter. A honeycomb-shaped cogierite carrier, for example, is used for the catalyst carrier, and a catalyst such as platinum is carried on the cogierite carrier.

The holding and sealing material of the catalytic converter serves to prevent damage to the catalyst carrier due to contact between the catalyst carrier and the metal shell when the car is traveling, while preventing leakage of gas from the gap between the metal shell and the catalyst carrier. The holding and sealing material also serves to establish thermal insulation from the metal shell in order to make the catalyst undergo efficient reaction from the initial stage of its use. A suitable material capable of performing these roles is a mat-like material made of alumina-silica based ceramic fibers.

The mat-like material made of alumina-silica based ceramic fibers is bulky. Therefore, for the holding and sealing material, assemblage in the catalyst carrier should be improved. In view of the above described situation, techniques, which reduce the thickness of the mat-like material by impregnating a mat-like material made of inorganic fibers with an organic binder, have been proposed.

In the case of the holding and sealing material impregnated with the organic binder, however, when the holding and sealing material is used while it is arranged in a gap, the organic binder is decomposed due to the heat from the exhaust gas, and the decomposition gas is released into the atmosphere. At least several wt% or more of such organic binder should be used for impregnating the holding and sealing material in order to improve assemblage. Therefore, with the conventional technique, it is very difficult to achieve a low-pollution characteristic surpassing the conventionally achievable level while maintaining suitable assemblage.

In addition, in recent years, the temperature of exhaust gas has been on a gradual increase as the performance of engines has been improved. For a high fuel efficiency lean-burn engine, for example, exhaust gas temperature reaches nearly 1000 °C, and thus the contact pressure generated by the holding and sealing material exposed to high temperature drops in a relatively short time. Therefore, sealing performance and carrier holding performance in the gap portion is deteriorated at an early stage, and thus the durability of the catalytic converter is reduced.

JP 07286514 discloses a catalyst material which is provided between a catalyst casing and a honeycomb type catalyst stored in the casing is constituted by a blanket which is composed by accumulating alumina fibers having fiber tensile strength of 150-400 kg/mm2, content of shot having diameter of 45 µm or more of 5 weight % or less, and weight ratio of Al₂O₃/SiO₂ of 70/30-74/26 and orienting a part of the fiber in the longitudinal direction for the accumulated surface by needle-punching. Degree of crystallity of the alumina fiber is 0-10%.

### Disclosure of the Invention

A first object of the present invention is to provide a catalytic converter having an extremely low-pollution characteristic while being excellent in durability and assemblage.

The second object of the present invention is to provide a holding and sealing material for catalytic converters suitable for achieving the above described excellent catalytic converter, and a method for manufacturing the same.

In a first aspect of the present invention, a holding and sealing material disposed between a catalyst carrier and a metal shell covering the catalyst carrier is provided. The holding and sealing material includes a fiber aggregate mainly comprised of alumina-silica based ceramic fibers having a mullite crystal content of 0.5 to 4 wt%, and the fiber aggregate having been subjected to a needle punch treatment.
The fibers have an average diameter of 7 to 13 µm. The thickness of the material before being assembled is 1.1 to 4 times as large as the size of the gap between the catalyst carrier and the metal shell.

Some of the ceramic fibers may be intertwined in the direction of thickness of the fiber aggregate.

In a second aspect of the present invention, a method is provided for manufacturing a holding and sealing material for a catalytic converter, disposed between a catalyst carrier and a metal shell covering the catalyst carrier . The manufacturing method includes the steps of performing fiber spinning using as a raw material an aqueous solution composed of a mixture of an aluminum salt, a silica sol and an organic polymer to prepare alumina-silica based ceramic fibers, stacking the alumina-silica based ceramic fibers to prepare a fiber aggregate, subjecting the fiber aggregate to a needle punch treatment, and baking the fiber aggregate, having been subjected to a needle punch treatment, to prepare a holding and sealing material comprising a fiber aggregate having a mullite crystal content of 0.5 to 4 wt%.
The fibers have an average diameter of 7 to 13 µm. The thickness of the material before being assembled is 1.1 to 4 times as large as the size of the gap between the catalyst carrier and the metal shell.

In a further aspect of the present invention, a catalytic converter is provided. The catalytic converter includes a catalyst carrier, a metal shell covering the catalyst carrier, with a holding and sealing material as defined above disposed between the catalyst carrier and the metal shell.

### Brief Description of the Drawings

Fig. 1 is an explanatory view of a state of use of a catalytic converter of one embodiment according to the present invention;
Fig. 2 is a schematic sectional view of the catalytic converter of one embodiment according to the present invention;
Fig. 3(a) is a plan view of a holding and sealing material for use in the catalytic converter of Fig. 2;
Fig. 3(b) is a schematic perspective view illustrating a method of assembly for the catalytic converter of Fig. 2.
Fig. 3(c) is a schematic perspective view of the catalytic converter in which assembly is completed; and
Fig. 4 is a graph showing a relationship between the mullite content in the holding and sealing material for use in the catalytic converter and the contact pressure.

### Best Mode for Carrying Out the Invention

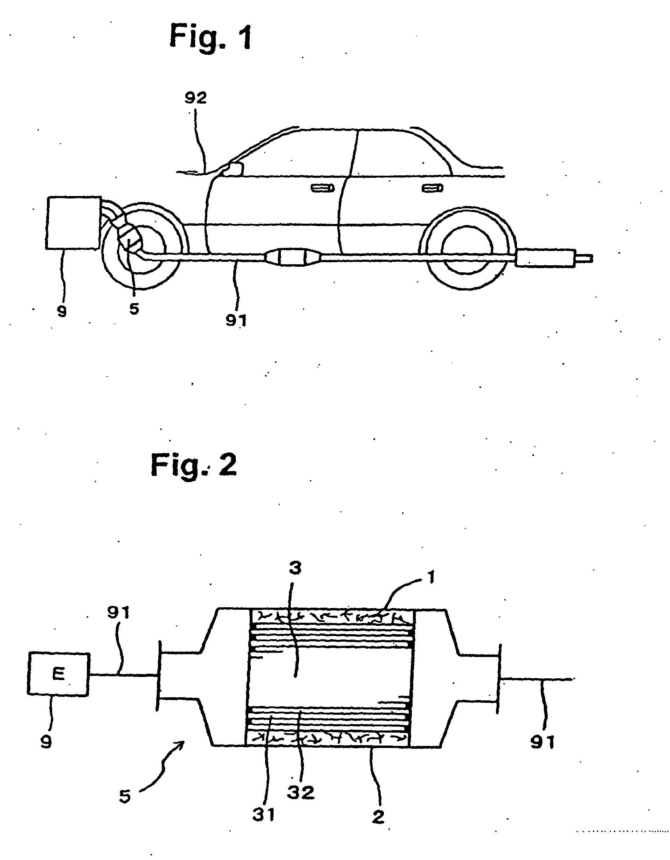

A catalytic converter 5 for an automobile exhaust gas cleaning apparatus of one embodiment according to the present invention will be described in detail below based on Figs. 1 to 4.

As shown in Fig. 1, the catalytic converter 5 is provided at some position along an exhaust pipe 91 of an engine 9 along a body 92 of a vehicle. Furthermore, since the distance between the engine 9 and the catalytic converter 5 is relatively small, a high temperature exhaust gas of about 700°C to 900° C is supplied to the catalytic converter 5. In the case where the engine is a lean burn engine, an exhaust gas of higher temperature of about 900°C to 1000°C is supplied to the catalytic converter 5.

As shown in Fig. 2, the catalytic converter 5 comprises a cylindrical catalyst carrier 3, a metal shell 2 covering the outer periphery of the catalyst carrier 3, and a holding and sealing material 1 disposed in a gap between the catalyst carrier 3 and the metal shell 2.

The catalyst carrier 3 is prepared using a ceramic material represented by cogierite or the like. Also, the catalyst carrier 3 is preferably a honeycomb structure having a large number of cells 31, 32 extending along the axis line. Furthermore, a catalyst such as platinum or rhodium capable of cleaning exhaust gas components is carried on the wall of cells.

The metal shell 2 is preferably a cylindrical metal member having an O-shaped section, for example, if a press fitting method is employed for mounting. Furthermore, for the metal material for forming the cylindrical member, a metal having excellent heat resistance and impact resistance is preferably selected. If a so-called canning method is employed instead of the press fitting method, a metal shell (i.e., clam shell), which is formed by dividing the cylindrical metal member having an O-shaped section into a plurality of sections along the axis line, is used.

In addition, for example, if a rolling method is employed for mounting, a cylindrical metal member is used, which has a C-shaped or U-shaped section (i.e., a cylindrical metal member is formed with one slit (opening) extending along the axis). In this case, for assembling the catalyst carrier 3, the catalyst carrier 3 with the holding and sealing material 1 fixed on the surface is disposed in the metal shell 2, the metal shell 2 is rolled up in this state, and thereafter the end of the slit opening is sealed (welded, bonded, bolted or the like). Sealing such as welding, bonding or bolting is also performed when the canning method is employed.

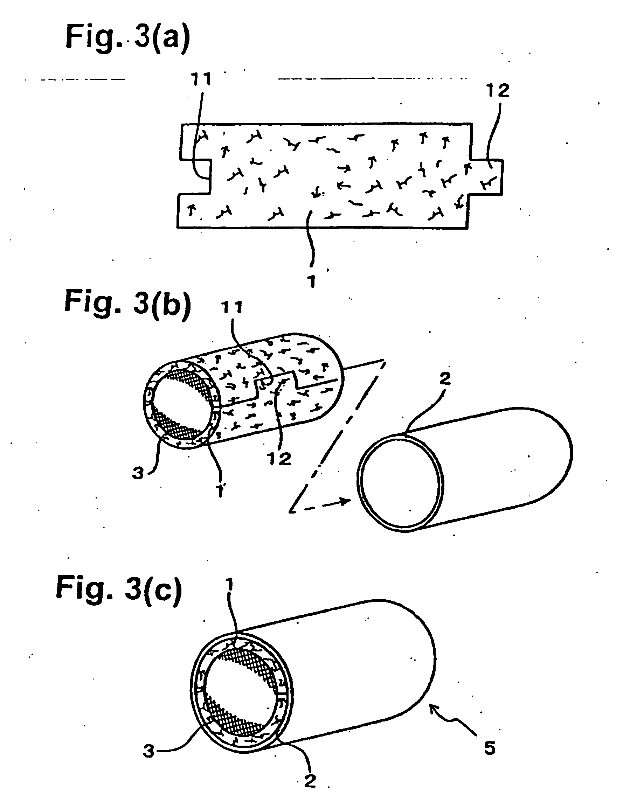

As shown in Fig. 3(a), the holding and sealing material 1 is an elongated mat-like material, with a concave mating portion 11 provided at one end thereof, while a convex mating portion 12 is provided at the other end. When the holding and sealing material 1 is wound around the catalyst carrier 3, the convex mating portion 12 is engaged with the concave mating portion 11.

The holding and sealing material 1 comprises a fiber aggregate mainly comprised of alumina-silica based ceramic fibers having a mullite crystal content of 0.5 to 4 wt%. In other words, the holding and sealing material 1 comprises a fiber aggregate mainly comprised of ceramic fibers made of an aluminum-silicon spinel compound containing 0.5 to 4 wt% of mullite crystal. With such a chemical composition, the holding and sealing material 1 has excellent heat resistance and high resiliency against an applied compression load. Thus, the contact pressure hardly drops even when the holding and sealing material 1 is exposed to high temperature while it is situated in the gap. Also, the aluminum-silicon spinel compound is, for example, γ-alumina, δ-alumina, or χ-alumina.

The alumina-silica based ceramic fibers have preferably a chemical composition with the alumina content of 68 wt% to 83 wt% and the silica content of 17 wt% to 32 wt%, and specifically more preferably have a composition of Al₂O₃:SiO₂ = 72:28.

If the content of alumina is less than 68 wt% or the content of silica exceeds 32 wt%, it may be impossible to achieve sufficient improvement in heat resistance and in resiliency against an applied compression load. Similarly, if the content of alumina exceeds 83 wt% or the content of silica is less than 17 wt%, it may be impossible to achieve sufficiently improvement in heat resistance and in resiliency against an applied compression load.

The fiber aggregate is prepared by a needle punch treatment that is one type of a fiber intertwinement treatment. Consequently, some of the ceramic fibers are intertwined at needle punch spots in the direction of thickness of the fiber aggregate. Furthermore, in the needle punch treatment, for example, a tabular jig (needle board) with a large number of needles erected thereon is used.

The abundance density of needle punch spots is preferably 10 to 500 spots, more preferably 20 to 250 spots per 100 cm².

If the abundance density of needle punch spots is less than 10 spots per 100 cm², the holding and sealing material 1 cannot reliably be compressed in the direction of thickness, and thus it may be impossible to reduce the thickness of the holding and sealing material 1 sufficiently to a level allowing achievement of suitable assemblage. If the abundance density of needle punch spots exceeds 500 spots per 100 cm², on the other hand, the thickness of the holding and sealing material 1 can be reduced sufficiently, but it may be impossible to enhance resiliency against an applied compression load due to the existence of the large number of needle punch spots.

Before assembly and after the needle punch treatment is applied, it is preferably that the bulk density (GBD) of the holding and sealing material 1 is 0.1 g/cm³ to 0.6 g/cm³ further preferably 0.2 g/cm³ to 0.4 g/cm³. Also, the pack density with the holding and sealing material 1 assembled is preferably set to a level the same as described above. If the bulk density and the pack density are too small, it may be impossible to reliably hold the catalyst carrier 3 due to a reduction in generated contact pressure. If the bulk density and the pack density are too large, on the other hand, rigidity is improved, but it may be difficult to carry out assembly due to a reduction in deformability.

The content of the organic component (organic binder) contained in ceramic fibers constituting the holding and sealing material 1 is preferably 1 wt% or less, further preferably 0.1 wt% or less, particularly preferably 0.01 wt% or less. If the content of organic binder is increased to several wt% or more, the organic binder is decomposed by the heat from exhaust gas, thereby increasing the amount of gas released into the atmosphere. Therefore, it is very difficult to achieve low-pollution characteristics surpassing the conventionally achievable level.

The thickness of the holding and sealing material 1 before being assembled is equivalent to preferably about 1.1 to 4.0 times, further preferably about 1.5 to 3.0 times as large as the size of the gap between the catalyst carrier 3 and the metal shell 2. If the thickness is smaller than 1.1 times the size of the gap, it may be impossible to obtain a high level of carrier holding performance, thus raising the possibility that the catalyst carrier 3 is shifted relative to the metal shell 2 and worn. In this case, it is also impossible to obtain a high level of sealing performance, and therefore the exhaust gas is more easily leaked through the gap portion, thus making it impossible to achieve a high level low-pollution characteristic. Also, if the thickness of the holding and sealing material 1 is larger than 4.0 times the size of the gap, it is difficult to place the catalyst carrier 3 in the metal shell 2, especially if a press fitting method is employed. Thus, it may be impossible to achieve an improvement in assemblage.

In addition, the average diameter of alumina-silica based ceramic fibers constituting the holding and sealing material 1 is preferably about 5 to 20 µm, more preferably about 7 to 13 µm. The average length of the ceramic fibers is preferably about 0.1 to 100 mm, more preferably about 2 to 50 mm. The tensile strength of the ceramic fiber itself is preferably 0.1 GPa or more, particularly preferably 0.5 GPa or more.

The procedure for manufacturing the holding and sealing material 1 will now be described.

First, an aluminum salt, a silica sol and an organic polymer are mixed with water as a solvent to prepare a spinning solution. In this case, an anti-foam agent and the like may be added to the spinning solution. Furthermore, by changing the ratio between the aluminum salt and the silica sol, the chemical composition of alumina-silica based ceramic fibers can be controlled to some extent.

Then, the obtained spinning solution is concentrated under reduced pressure, thereby preparing a spinning solution of which concentration, temperature, viscosity and the like are suitable for spinning. Here, the spinning solution with the concentration of about 20 wt% is preferably concentrated to about 30 to 40 wt%.

In addition, the prepared spinning solution is made to continuously issue into the atmosphere from the nozzle of a spinning apparatus, and formed alumina-silica based ceramic fibers are drawn and wound up. In this case, for example, a dry pressure spinning method may be employed.

Long fibers of the alumina-silica based ceramic fibers obtained through the above described spinning step are chopped into a predetermined length to form relatively short fibers, and thereafter the fibers are dispersed in water. The obtained fiber dispersion is caused to flow into a molding jig to pressurize and dry the fiber dispersant, thereby obtaining a mat-like material with fibers stacked thereon.

The mat-like material (fiber aggregate) obtained through the above described stacking step is subjected to a needle punch treatment using the above described needle punch. By this processing, uncured and flexible fibers are reliably and uniformly intertwined.

Then, the fiber aggregate subjected to a needle punch treatment is baked, whereby the uncured and flexible fibers are dried and baked, and are thereby cured. In this case, baking conditions should be set so that the content of mullite crystal in the fiber aggregate obtained by baking is 10 wt% or less.

For example, the baking temperature in the baking step is set to preferably 1100°C to 1300°C. If the baking temperature is lower than 1100°C, the alumina-silica based fibers may not be sufficiently dried and baked, and it may thus be impossible to reliably achieve excellent heat-resistance and a high level of resiliency against an applied compression load to the holding and sealing material 1. Conversely, if the baking temperature is higher than 1300°C, formation of the mullite crystal easily proceeds in the alumina-silica based ceramic fibers. Consequently, the content of mullite crystal can hardly be kept at 10 wt% or less, and it may thus be impossible to reliably achieve excellent heat-resistance and a high level of resiliency against an applied compression load to the holding and sealing material 1.

In addition, the baking time is set to preferably 1 to 60 minutes. If the baking time is shorter than 1 minute, the alumina-silica based fibers may not be sufficiently dried and baked, and it may thus be impossible to reliably achieve excellent heat-resistance and a high level of resiliency against an applied compression load to the holding and sealing material 1. Conversely, if the baking time exceeds 60 minutes, formation of the mullite crystal easily proceeds in the alumina-silica based ceramic fibers. Consequently, the content of mullite crystal can hardly be kept at 10 wt% or less, and it may thus be impossible to reliably achieve excellent heat-resistance and a high level of resiliency against an applied compression load to the holding and sealing material 1.

In addition, for baking the fiber aggregate at a high temperature of 1100°C to 1300°C, it is preferably heated at 200°C to 400°C for about 10 to 60 minutes as a pretreatment.

Furthermore, after the above described baking step, the holding and sealing material 1 may be impregnated with the organic binder, and thereafter compressed in the direction of thickness as necessary. The organic binder in this case is polyvinyl alcohol, acryl resin as well as latex such as acryl rubber or nitrile rubber or the like. For the impregnation method, a well known method such as a dipping, spray, or roll-coater method may be employed.

Then, the holding and sealing material 1 prepared through the above described steps is wound around the outer periphery of the catalyst carrier 3 and thereby fixed, followed by carrying out press fitting, canning or rolling-up to complete the catalytic converter 5.

### [Example 1]

### (Preparation in Example 1)

In Example 1, a cogierite monolith having an outer diameter of 130 mm and a length of 100 mm was used as the catalyst carrier 3. Also, a cylindrical shell made of SUS 304 and having a thickness of 1.5 mm and an inner diameter of 140 mm was used as the metal shell 2. The mat-like holding and sealing material 1 was prepared in the following way.

First, 23.5 wt% of basic aluminum chloride, 20 wt% of colloid silica, 10 wt% of polyvinyl alcohol and a small amount of anti-foam agent (n-octanol) were mixed with water and sufficiently stirred to prepare a spinning solution.

The obtained spinning solution was concentrated under reduced pressure using an evaporator, whereby the concentration, temperature and viscosity of the spinning solution was adjusted. In this Example, the concentration of the spinning solution was set to 38 wt%, the temperature was set to 50°C, and the viscosity was set to 1000 poise, and the spinning solution was left standing for one day.

The prepared spinning solution after being left standing for one day or longer was made to continuously issue into the atmosphere (20°C, humidity of 50%) from the nozzle of a dry pressure spinning apparatus and stacked.

Then, the fiber aggregate obtained through the above described stacking step was subjected to a needle punch treatment using the above described jig. Here, the abundance density of needle punch spots was set to 100 spots per 100 cm².

In addition, the fiber aggregate subjected to the needle punch treatment was heated at 25°C for 30 minutes as a pretreatment, and was thereafter baked at 1250°C for 10 minutes under a normal oxidizing atmosphere in a box type electric furnace. As a result, alumina-silica based ceramic fibers with the mullite crystal content of 2 wt% were obtained.

In this connection, the average diameter of alumina silica based ceramic fibers obtained by baking was 9.1 µm, and the average length was 5 mm, and the fiber had an almost circular section and a linear structure. Also, the density of the ceramic fiber itself was 3.0 g/cm³, and the tensile strength thereof was 0.65 GPa. The ceramic fiber had a composition of Al₂O₃:SiO₂ = 72:28, and had γ-alumina and χ-alumina as a main component.

After the above described baking step, the holding and sealing material 1 was impregnated with the organic binder by the dipping method, followed by compressing the holding and sealing material 1 in the direction of thickness. Here, latex was selected as the organic binder, and the concentration of latex was set to 1 wt% or less at this point.

The obtained bulk density of the holding and sealing material 1 was about 0.15 g/cm³ at this time.

The holding and sealing material 1 prepared through the above described steps was then wound around the outer periphery of the catalyst carrier 3 and thereby fixed, and was thereafter press-fitted in the metal shell 2 to complete the catalytic converter 5.

### (Preparation in Examples 2 to 5)

In Examples 2 to 5, fundamentally, the holding and sealing material 1 was prepared in accordance with the procedure and conditions in Example 1, and was mounted in the same manner as Example 1 to complete the catalytic converter 5. In Examples 2 and 3, the temperature during baking was set to a temperature higher than that of Example 1 so that the mullite crystal content was 3 wt% and 9.8 wt%, respectively. Example 3 is not in accordance with the present invention. Conversely, in Examples 4 and 5, the temperature during baking was set to a temperature lower than that of Example 1 so that the mullite crystal content was 0 wt% and 1 wt%, respectively. Example 4 is not in accordance with the present invention. However, the baking temperature and the baking time were set within the range of from 1100°C to 1300°C and from 1 to 60 minutes, respectively.

### (Preparation in Comparative Examples 1 and 2)

In Comparative Examples 1 and 2, fundamentally, the holding and sealing material 1 was prepared in accordance with the procedure and conditions in Example 1, and was assembled in the same manner as Example 1 to complete the catalytic converter 5. However, in Comparative Examples 1 and 2, the temperature for baking was set to a temperature higher than 1300°C. As a result, the mullite crystal contents were 15 wt% and 20 wt%, respectively, both of which exceeded the mullite crystal contents of Examples.

### (Preparation in Comparative Example 3)

In Comparative Example 3, fundamentally, the holding and sealing material 1 was prepared in accordance with the procedure and conditions in Example 1, and was mounted in the same manner as Example 1 to complete the catalytic converter 5. In Comparative Example 3, however, a needle punch treatment was not carried out and instead, the content of organic binder was increased to 15 wt% to prepare the holding and sealing material 1. Furthermore, the mullite crystal content was set to 15 wt%.

### (Method of Comparison Test and Result)

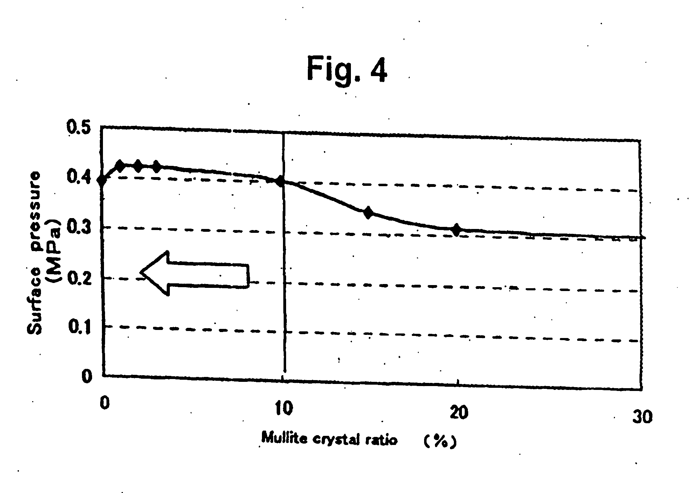

The catalytic converters 5 of Examples 1 to 5 and Comparative Examples 1 to 3 described above were set in a testing apparatus, and an exhaust gas of 100°C was caused o flow therethrough for 30 minutes, followed by measuring generated contact pressure (MPa) of the holding and sealing material 1. The results are shown in the graph of Fig. 4.

From this graph, it can be understood that highest contact pressure was generated in Examples 1, 2 and 5, and high contact pressure is generated in Examples 3 and 4. On the other hand, it can be understood that in Comparative Examples 1, 2 and 3, the values of generated contact pressure were smaller than those in the Examples, resulting in apparently poor performance compared to the Examples. Furthermore, the exhaust gas was caused to flow through the testing apparatus for a prolonged time period, followed by measuring the generated contact pressure, and it was found that the generated contact pressure hardly dropped at least for the Examples.

The assemblage of the holding and sealing material 1 is satisfactory in any case.

In addition, when operating tests were conducted with the catalytic converter 5 installed in a vehicle, and thereafter observations were made, neither shifts in position and cracks in the catalyst carrier 3 nor leakage of exhaust gas were not found at all for the Examples. For Comparative Examples in which the generated contact pressure was relatively low, shifts in position and cracks easily occurred in the catalyst carrier 3. In addition, in some Comparative Examples, exhaust gas was leaked.

Gas released to the environment through a muffler from the catalytic converter 5 during the operating test was sampled, and its components analyzed. As a result, the contents of CO, HC, NOx and the like causing air pollution were extremely small for the Examples, while for the Comparative Examples, the content of the above described compounds were somewhat larger compared to the Examples.

The holding and sealing material 1 of this embodiment achieves the following advantages.
(1) The holding and sealing material 1 of this embodiment comprises a fiber aggregate mainly comprised of alumina-silica based ceramic fibers having a mullite crystal content of 10 wt% or less. Consequently, it has excellent heat resistance and a high level of resiliency against an applied compression load. Therefore, even when the holding and sealing material 1 disposed in the gap is exposed to high temperature, the generated contact pressure hardly drops. Thus, if the catalytic converter 5 is fabricated using the holding and sealing material 1, the catalytic converter 5 capable of maintaining a high level of sealing performance and carrier holding performance for a long period and having excellent durability can be obtained.
(2) The fiber aggregate of the holding and sealing material 1 is subjected to a needle punch treatment. Consequently, some ceramic fibers are intertwined at needle punch spots in the direction of thickness of the fiber aggregate, and thus the thickness of the fiber aggregate is reduced such that it is compressed in the direction of thickness. Therefore, bulkiness of the fiber aggregate is alleviated, thus bringing about excellent assemblage. In addition, the amount of organic binder required for reducing the thickness of the fiber aggregate can be reduced as it is subjected to a needle punch treatment. Therefore, extremely low-pollution characteristics can be achieved while maintaining satisfactory assemblage.
(3) According to the method for manufacturing the holding and sealing material in this embodiment, fibers can be intertwined reliably and uniformly, thus making it possible to set the abundance density of needle punch spots to a lower level. From the fact described above and so on, according to this manufacturing method, the above described holding and sealing material 1 for catalytic converters can be obtained easily and reliably.

Furthermore, the embodiment of the present invention may be changed as follows.

Fibers may be intertwined by a mechanical fiber intertwinement processing method other than the needle punch treatment. In addition, a non-mechanical fiber intertwinement processing method utilizing water power, air power or the like may be employed.

The form of the holding and sealing material 1 may freely be changed. For example, concave and convex positional mating portions 11 and 12 may be eliminated to provide a simpler form.

The sectional form of the catalyst carrier 3 is not limited to a circle, and for example, an elliptical or oblong form is acceptable. In this case, the sectional form of the metal shell 2 may be changed to an elliptical or oblong form in accordance therewith.

A material other than precious metals may be carried on the catalyst carrier 3 as a catalyst.

For the catalyst carrier 3, a cogierite carrier formed into a honeycomb shape is used, but a honeycomb porous sintered body such as silicon carbide or silicon nitride, for example, may also be used.

The holding and sealing material 1 of the present invention may be used not only in the catalytic converter 5 for an exhaust gas cleaning apparatus, but also in, for example, a diesel particulate filter (DPF) and a catalytic converter for a fuel cell reforming apparatus.

## Claims

1. A catalytic converter (5) comprising:
a catalyst carrier (3);
a metal shell (2) covering said catalyst carrier; and
a holding and sealing material (1) disposed between the catalyst carrier (3) and the metal shell (2), the holding and sealing material (1) comprising a fiber aggregate mainly comprised of alumina-silica based ceramic fibers, the average diameter of the alumina-silica based ceramic fibers being 7 µm to 13 µm, and the fiber aggregate having been subjected to a needle punch treatment,
the holding and sealing material **characterized in that** the alumina-silica based ceramic fibers having at least one selected from a group consisting of γ-alumina, δ-alumina, and χ-alumina, the alumina-silica based ceramic fibers have a mullite crystal content of 0.5 to 4 wt%, wherein the thickness of the holding and sealing material (1) before being assembled is about 1.1 to 4.0 times as large as the size of the gap between the catalyst carrier (3) and the metal shell (2).

2. The holding and sealing material according to claim 1, wherein said alumina-silica based ceramic fibers have a chemical composition with the alumina content being 68 wt% to 83 wt% and the silica content being 17 wt% to 32 wt%.

3. The holding and sealing material according to any one of claims 1 and 2, wherein the seal material disposed between the catalyst carrier (3) and the metal shell (2) generates a contact pressure of 0.02 MPa or more.

4. The holding and sealing material according to any one of claims 1 to 3, wherein the abundance density of said needle punch spots is from 10 to 500 spots per 100 cm².

5. The holding and sealing material according to any one of claims 1 to 4, wherein some of said ceramic fibers are intertwined in the direction of thickness of said fiber aggregate.

6. A method for manufacturing a catalytic converter (5) comprising a catalyst carrier (3), a metal shell (2) covering said catalyst carrier, and a holding and sealing material (1) disposed between the catalyst carrier (3) and the metal shell (2), the method comprises the steps of:
performing fiber spinning using as a raw material an aqueous solution composed of a mixture of an aluminum salt, a silica sol and an organic polymer to prepare alumina-silica based ceramic fibers the average diameter of which is 7 µm to 13 µm, the alumina-silica based ceramic fibers having at least one selected from a group consisting of γ-alumina, δ-alumina, and χ-alumina;
stacking the alumina-silica based ceramic fibers to prepare a fiber aggregate;
subjecting said fiber aggregate to a needle punch treatment; and
baking said fiber aggregate subjected to the needle punch treatment to prepare a holding and sealing material (1) comprising a fiber aggregate, the method **characterized in that** the fiber aggregate has a mullite crystal content of 0.5 to 4 wt%, wherein the thickness of the holding and sealing material (1) before being assembled is about 1.1 to 4.0 times as large as the size of the gap between the catalyst carrier (3) and the metal shell (2).

7. The method for manufacturing a holding and sealing material according to claim 6, wherein the baking temperature in said baking step is 1100°C to 1300°C.

8. The method for manufacturing a holding and sealing material according to claim 7, wherein the baking time in said baking step is 1 to 60 minutes.

## Patentansprüche

1. Katalysator (5) beinhaltend
einen Katalysatorträger (3);
eine Metallhülle (2), die den Katalysatorträger abdeckt; und
ein Halte- und Dichtungsmaterial (1), das zwischen dem Katalysatorträger (3) und der Metallhülle (2) angeordnet ist, wobei das Halte- und Dichtungsmaterial (1) ein Faseraggregat umfasst, dass im Wesentlichen Keramikfasern auf Basis von Aluminiumoxid-Siliziumoxid umfasst, wobei der mittlere Durchmesser der Keramikfasern auf Basis von Aluminiumoxid-Siliziumoxid 7 µm bis 13 µm beträgt und das Faseraggregat einer Nadelstoßbehandlung unterzogen worden ist,
wobei das Halte- und Dichtungsmaterial **dadurch gekennzeichnet ist, dass** die Keramikfasern auf Basis von Aluminiumoxid-Siliziumoxid wenigstens eines ausgewählt aus einer Gruppe bestehend aus γ-Aluminiumoxid, δ-Aluminiumoxid und χ-Aluminiumoxid aufweisen, die Keramikfasern auf Basis von Aluminiumoxid-Siliziumoxid einen Mullitkristallgehalt von 0,5 bis 4 Gew.-% aufweisen, worin die Dicke des Halte- und Dichtungsmaterials (1) vor dem Zusammensetzen etwa 1,1- bis 4,0-fach so groß ist wie die Größe des Spalts zwischen dem Katalysatorträger (3) und der Metallhülle (2).

2. Halte- und Dichtungsmaterial gemäß Anspruch 1, worin die Keramikfasern auf Basis von Aluminiumoxid-Siliziumoxid eine chemische Zusammensetzung mit einem Aluminiumoxidgehalt im Bereich von 68 Gew.-% bis 83 Gew.-% und einem Siliziumoxidgehalt im Bereich von 17 Gew.-% bis 32 Gew.-% aufweisen.

3. Halte- und Dichtungsmaterial gemäß Anspruch 1 oder 2, worin das Dichtungsmaterial, das zwischen dem Katalysatorträger (3) und der Metallhülle (2) angeordnet ist, einen Auflagedruck von 0,02 MPa oder mehr erzeugt.

4. Halte- und Dichtungsmaterial gemäß einem der Ansprüche 1 bis 3, worin die Dichte der Nadelstoßpunkte von 10 bis 500 Punkte pro 100 cm² beträgt.

5. Halte- und Dichtungsmaterial gemäß einem der Ansprüche 1 bis 4, in dem einige der Keramikfasern in Richtung der Dicke des Faseraggregats verschlungen sind.

6. Verfahren zum Herstellen eines Katalysators (5) beinhaltend einen Katalysatorträger (3), eine Metallhülle (2), die den Katalysatorträger abdeckt, und ein Halte- und Dichtungsmaterial (1), das zwischen dem Katalysatorträger (3) und der Metallhülle (2) angeordnet ist, umfassend
Faserspinnen unter Verwendung einer wässrigen Lösung, die aus einer Mischung eines Aluminiumsalzes, eines Siliziumoxidsols und eines organischen Polymers zusammengesetzt ist, als Ausgangsmaterial zur Herstellung von Keramikfasern auf Basis von Aluminiumoxid-Siliziumoxid, deren mittlerer Durchmesser 7 µm bis 13 µm beträgt, wobei die Keramikfasern auf Basis von Aluminiumoxid-Siliziumoxid wenigstens eines ausgewählt aus der Gruppe bestehend aus γ-Aluminiumoxid, δ-Aluminiumoxid und χ-Aluminiumoxid aufweisen;
Stapeln der Keramikfasern auf Basis von Aluminiumoxid-Siliziumoxid zur Herstellung eines Faseraggregats;
Durchführen einer Nadelstoßbehandlung im Faseraggregat; und
Brennen des Faseraggregats, das der Nadelstoßbehandlung unterzogen worden ist, zur Herstellung eines Halte- und Dichtungsmaterials umfassend ein Faseraggregat, wobei das Verfahren **dadurch gekennzeichnet ist, dass** das Faseraggregat einen Mullitkristallgehalt von 0,5 bis 4 Gew.-% aufweist, wobei die Dicke des Halte- und Dichtungsmaterials (1) vor dem Zusammensetzen etwa 1,1- bis 4,0-fach so groß ist wie die Größe des Spalts zwischen dem Katalysatorträger (3) und der Metallhülle (2).

7. Verfahren zum Herstellen eines Katalysators gemäß Anspruch 6, worin die Brenntemperatur in dem Brennschritt 1100°C bis 1300°C beträgt.

8. Verfahren zum Herstellen eines Katalysators gemäß Anspruch 7, worin die Brennzeit in dem Brennschritt 1 bis 60 Minuten beträgt.

## Revendications

1. Convertisseur catalytique (5) comprenant:
un support de catalyseur (3);
une coque métallique (2) qui couvre ledit support de catalyseur; et
un matériau (1) de maintien et d'étanchéité disposé entre le support de catalyseur (3) et la coque métallique (2), le matériau (1) de maintien et d'étanchéité comprenant un agrégat de fibres principalement composé de fibres céramique à base d'alumine-silice, le diamètre moyen des fibres céramique à base d'alumine-silice étant de 7µm à 13µm, et l'agrégat de fibres ayant été soumis à un traitement d'aiguilletage,
le matériau de maintien et d'étanchéité **caractérisé en ce que** les fibres céramique à base d'alumine-silice ayant au moins un élément choisi parmi un groupe composé de γ-alumine, de δ-alumine, et de χ-alumine, et les fibres céramique à base d'alumine-silice ont une teneur en cristaux de mullite de 0,5 à 4% en poids, où l'épaisseur du matériau (1) de maintien et d'étanchéité avant d'être assemblé est d'environ 1,1 à 4,0 fois plus importante que la taille de l'écart entre le support de catalyseur (3) et la coque métallique (2).

2. Matériau de maintien et d'étanchéité selon la revendication 1, dans lequel lesdites fibres céramique à base d'alumine-silice ont une composition chimique avec la teneur en alumine étant de 68% en poids à 83% en poids et la teneur en silice étant de 17% en poids à 32% en poids.

3. Matériau de maintien et d'étanchéité selon l'une quelconque des revendications 1 et 2, dans lequel le matériau d'étanchéité disposé entre le support de catalyseur (3) et la coque métallique (2) génère une pression de contact de 0,02 MPa ou plus.

4. Matériau de maintien et d'étanchéité selon l'une quelconque des revendications 1 à 3, dans lequel la densité d'abondance desdits points d'aiguilletage est de 10 à 500 points par 100 cm².

5. Matériau de maintien et d'étanchéité selon l'une quelconque des revendications 1 à 4, dans lequel certaines desdites fibres céramique sont entrelacées dans la direction de l'épaisseur dudit agrégat de fibres.

6. Procédé destiné à fabriquer un convertisseur catalytique (5) comprenant un support de catalyseur (3), une coque métallique (2) couvrant ledit support de catalyseur, et un matériau (1) de maintien et d'étanchéité disposé entre le support de catalyseur (3) et la coque métallique (2), le procédé comprend les étapes qui consistent :
à exécuter un filage de fibres en utilisant comme matière première une solution aqueuse composée d'un mélange d'un sel d'aluminium, d'un sol de silice et d'un polymère organique pour préparer des fibres céramique à base d'alumine-silice dont le diamètre moyen est de 7µm à 13µm, les fibres céramique à base d'alumine-silice ayant au moins un élément choisi parmi un groupe composé de γ-alumine, de δ-alumine, et de χ-alumine ;
à empiler les fibres de céramique à base d'alumine-silice pour préparer un agrégat de fibres ;
à soumettre ledit agrégat de fibres à un traitement d'aiguilletage ; et
à cuire ledit agrégat de fibre soumis au traitement d'aiguilletage pour préparer un matériau (1) de maintien et d'étanchéité comprenant un agrégat de fibres, le procédé **caractérisé en ce que** l'agrégat de fibres a une teneur en cristaux de mullite de 0,5 à 4% en poids, où l'épaisseur du matériau (1) de maintien et d'étanchéité avant d'être assemblé est d'environ 1,1 à 4,0 fois plus importante que la taille de l'écart entre le support de catalyseur (3) et la coque métallique (2).

7. Procédé destiné à fabriquer un matériau de maintien et d'étanchéité selon la revendication 6, dans lequel la température de cuisson dans ladite étape de cuisson est de 1100°C à 1300°C.

8. Procédé destiné à fabriquer un matériau de maintien et d'étanchéité selon la revendication 7, dans lequel le temps de cuisson lors de ladite étape de cuisson est de 1 à 60 minutes.
